# FASCICULE DE BREVET EUROPEEN

(11) **EP 1 512 518 B1**
(45) Date de publication et mention de la délivrance du brevet: **23.08.2006**
(21) Numéro de dépôt: 04292155.1
(22) Date de dépôt: 08.09.2004
(51) Int. Cl.: B29C 65/08, B60R 19/48

(54) **ENSEMBLE SOUDE D'UNE PIECE D'ASPECT AVEC UNE AUTRE POUR VEHICULE AUTOMOBILE ET PROCEDE**
VERSCHWEISSTE ANORDNUNG EINES SICHTTEILS MIT EINEM ANDEREN TEIL EINESKRAFTFAHRZEUGS UND VERFAHREN
WELDED ASSEMBLY OF AN APPEARANCE PART WITH ANOTHER PART OF AN AUTOMOTIVE VEHICLE AND METHOD

(30) Priorité: 08.09.2003 FR 0310567
(43) Date de publication de la demande: 09.03.2005
(73) Titulaire: COMPAGNIE PLASTIC OMNIUM, 69007 Lyon (FR)
(72) Inventeur: Vadot, Jacques, 01800 Meximieux (FR); Virelizier, François, 38300 Bourgoin Jallieu (FR); Verwaerde, Marc, 38460 Panossas (FR)
(74) Mandataire: Remy, Vincent Noel Paul

(56) Documents cités:
- WO-A-99/10876
- US-A- 5 092 643
- PATENT ABSTRACTS OF JAPAN vol. 010, no. 146 (M-482), 28 mai 1986 (1986-05-28) -& JP 61 002532 A (KONISHIROKU SHASHIN KOGYO KK), 8 janvier 1986 (1986-01-08)
- PATENT ABSTRACTS OF JAPAN vol. 0051, no. 39 (M-086), 3 septembre 1981 (1981-09-03) -& JP 56 071591 A (MATSUSHITA ELECTRIC IND CO LTD), 15 juin 1981 (1981-06-15)
- PATENT ABSTRACTS OF JAPAN vol. 2003, no. 10, 8 octobre 2003 (2003-10-08) & JP 2003 165161 A (MISHIMA DAIJI), 10 juin 2003 (2003-06-10) -& WO 03/047844 A (MISHIMA TAIJI ; TAMAMOTO OSAMU (JP)) 12 juin 2003 (2003-06-12)

## Description

La présente invention concerne un ensemble d'une pièce d'aspect en matière thermoplastique d'un véhicule automobile et d'une autre pièce ayant une partie mince en matière thermoplastique solidarisée à la pièce d'aspect par fusion de matière, et un procédé d'assemblage de ces deux pièces.

On connaît déjà, dans l'état de la technique, différents procédés d'assemblage de deux pièces en matière thermoplastiques, à savoir le soudage de languettes, le bouterollage et la soudure par points comme il ressort du document JP-A-61002532.

Lorsque l'une des pièces assemblées est une pièce d'aspect, ces procédés peuvent poser problème à cause de l'apparition de retassures sur la face extérieure de la pièce d'aspect, particulièrement lorsque cette pièce d'aspect présente une faible épaisseur.

En effet, d'une part, la soudure par points crée une flaque de matière fondue dans l'épaisseur de la pièce d'aspect, et lorsque cette flaque de matière fondue se solidifie, il apparaît une retassure sur la face extérieure.

D'autre part, la bouterollage et le soudage de languette supposent que la pièce d'aspect comporte des nervures, lesquelles forment aussi des retassures sur la surface extérieure.

L'invention a notamment pour but de remédier à cet inconvénient en fournissant un ensemble d'une pièce d'aspect en matière thermoplastique d'un véhicule automobile et d'une autre pièce ayant une partie mince en matière thermoplastique solidarisée à la pièce d'aspect par fusion de matière, dont la face extérieure de la pièce d'aspect ne comporte aucune retassure.

A cet effet, l'invention a pour objet un ensemble d'une pièce d'aspect en matière thermoplastique d'un véhicule automobile et d'une autre pièce ayant une partie mince en matière thermoplastique solidarisée à la pièce d'aspect par fusion de matière, **caractérisé en ce que** la partie mince présente des orifices traversants **et en ce que** la fusion de la pièce d'aspect avec cette partie mince est localisée uniquement sur les contours des orifices traversants.

On entend par partie mince une partie ayant une épaisseur entre 0,5mm et 4,5mm, et de préférence entre 1 mm et 3mm.

La fusion des deux pièces n'étant localisée que sur ces contours, il ne se forme pas lors de l'assemblage de flaque de matière fondue, ce qui fait que cette fusion est suffisamment discrète pour qu'il ne se forme pas de retassures sur la face extérieure de la pièce d'aspect.

Un ensemble selon l'invention peut en outre comporter l'une ou plusieurs des caractéristiques suivantes :
- la pièce d'aspect est une pièce de carrosserie ;
- la pièce d'aspect est une peau de pare-chocs ;
- l'autre pièce est une pièce-support d'un organe fonctionnel ;
- l'organe fonctionnel est un capteur, notamment capteur a ultrasons ;
- l'organe fonctionnel est un renfort, notamment un renfort de crosse de pare-chocs.

L'invention à également pour objet un procédé d'assemblage par fusion de matière d'une pièce d'aspect en matière thermoplastique d'un véhicule automobile sur une autre pièce ayant une partie mince en matière thermoplastique, la fusion de matière étant obtenue par soudage, par vibrations tangentielles d'une panne dans une gamme de fréquences ultrasonores, caractérisé en ce qu'on applique les vibrations tangentielles sur la partie mince de l'autre pièce jusqu'à former au moins un orifice traversant dans cette pièce ainsi qu'une fusion de cette pièce avec la pièce d'aspect sur les contours de cet orifice.

De façon optionnelle, dans ce procédé d'assemblage, on génère des vibrations à distance de la partie mince et selon une direction normale à cette partie mince, puis on transforme les vibrations générées selon la direction normale en vibrations tangentielles à cette partie mince, et on applique les vibrations tangentielles sur une zone réduite de la pièce d'aspect.

Ainsi, non seulement le procédé selon l'invention permet d'éviter les retassures en effectuant un soudage par ultrasons de manière tangentielle, mais il rend possible le soudage de pièces difficiles d'accès en raison de leur environnement, grâce au fait qu'il ne requiert qu'un accès à la pièce à souder selon une direction perpendiculaire au plan de soudage.

Un procédé d'assemblage selon l'invention peut en outre comporter l'une ou plusieurs des caractéristiques suivantes :
- le procédé utilise une sonotrode comportant une extrémité d'excitation, au moins une extrémité vibrante et un corps reliant l'extrémité d'excitation à l'extrémité vibrante, conformé pour transformer un mouvement périodique imprimé à l'extrémité d'excitation selon une direction d'excitation en un mouvement périodique de l'extrémité vibrante selon une direction de vibration perpendiculaire à la direction d'excitation ;
- la sonotrode utilisée possède deux extrémités vibrantes, disposées de telle manière que la sonotrode (16) a une forme de diapason ;
- les deux extrémités vibrantes de la sonotrode laissent entre elles un espace suffisant pour y laisser passer un capteur.

L'invention sera mieux comprise à la lecture de la description qui va suivre, donnée uniquement à titre d'exemple et faite en se référant aux dessins annexés dans lesquels :
- la figure 1 représente schématiquement le soudage de deux pièces en matière thermoplastique selon le procédé de l'invention ;
- la figure 2 montre l'aspect d'une soudure de deux pièces en matière thermoplastique selon le procédé de l'invention ;
- La figure 3 est une vue schématique de la face intérieure d'une pièce d'aspect d'un ensemble selon l'invention.

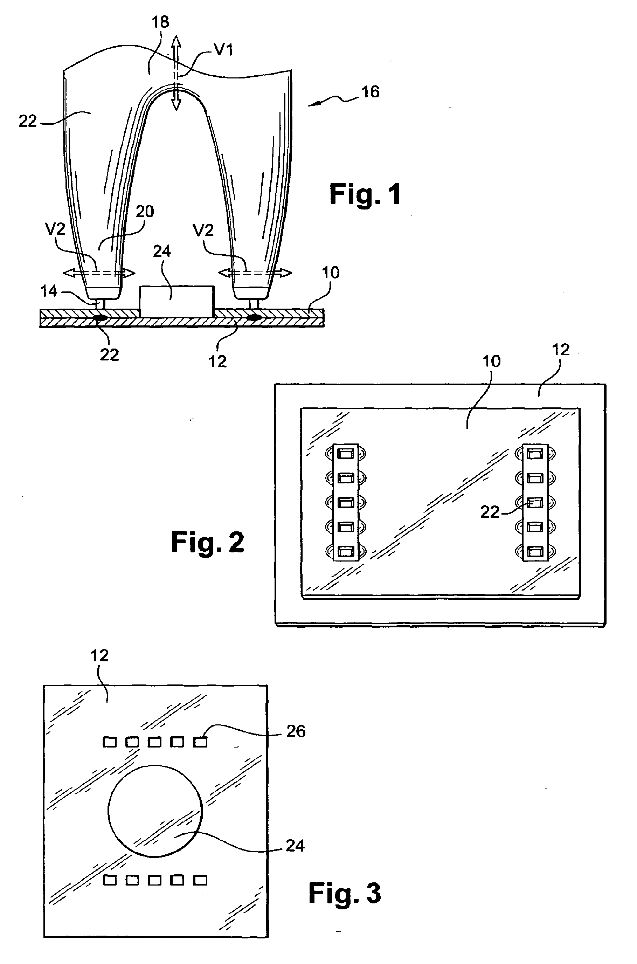

La figure 1 représente une première pièce 10 de faible épaisseur en matière thermoplastique en cours de soudage avec une seconde pièce 12 en matière thermoplastique selon le procédé selon l'invention, le soudage étant mis en oeuvre par application locale de vibrations sur la première pièce 10 à l'aide d'une panne 14 dans une gamme de fréquences ultra-sonores.

Cette panne est solidaire d'une sonotrode 16, comportant une extrémité d'excitation 18, une extrémité vibrante 20 portant la panne 14, et un corps 21 reliant l'extrémité d'excitation à l'extrémité vibrante, conformé pour transformer un mouvement périodique désigné par la référence V1 imprimé à l'extrémité d'excitation 18 selon une direction d'excitation, sensiblement normale à la première pièce 10, en un mouvement périodique V2 de l'extrémité vibrante 20, selon une direction de vibration perpendiculaire à la direction d'excitation.

Ainsi, d'après le procédé selon l'invention :
- des vibrations V1 sont générées dans l'extrémité d'excitation 18, et donc à distance de la première pièce 10, et selon une direction normale à cette première pièce 10 ;
- ces vibrations normales V1 sont transformées en vibrations tangentielles V2 à la première pièce 10 ;
- ces vibrations tangentielles V2 sont alors appliquées à l'aide de la panne 14 sur une zone réduite de la première pièce 10.

Ces vibrations tangentielles V2 forment des orifices traversants dans la pièce 10, ainsi qu'une fusion 22 de cette pièce 10 avec la pièce d'aspect 12 sur les contours de ces orifices. Cette fusion 22 ne provoque pas de retassure sur la surface externe de la seconde pièce 12. Il est en effet important qu'il n'y ait pas de retassures sur ce type de pièce 12, puisqu'il s'agit souvent d'une pièce de carrosserie, ou plus particulièrement d'une peau de pare-chocs.

La première pièce 10 quant à elle est en général une pièce-support d'un organe fonctionnel. Ici, l'organe fonctionnel est un capteur à ultrasons 24.

Afin que ce capteur ne gêne pas le soudage, la sonotrode 16 utilisée possède deux extrémités vibrantes 20 disposées de telle manière que la sonotrode a une forme de diapason.

Ces deux extrémités vibrantes 20 laissent entre elles une espace suffisant pour y laisser passer le capteur 24.

La sonotrode 16 est donc susceptible d'arriver perpendiculairement à la première pièce 10, afin d'effectuer un soudage tangentiel sans être gênée par le capteur 24.

La figure 2 représente un ensemble constitué d'une pièce de carrosserie 12 en matière thermoplastique d'un véhicule automobile et d'une pièce de faible épaisseur 10 en matière thermoplastique. Plus particulièrement, l'ensemble est constitué d'une peau de pare-chocs 12 en matière thermoplastique et d'une pièce-support 10 de capteur.

Cette pièce-support 10 de capteur est soudée sur ladite peau de pare-chocs par mise en oeuvre du procédé selon l'invention.

On peut voir sur cette figure 2 la forme prise par la soudure lors d'un soudage selon le procédé de l'invention.

La figure 3 est une vue schématique de la face intérieure de la pièce d'aspect 12. On peut y voir les contours 26 correspondant aux contours des orifices traversants où cette pièce d'aspect 12 est fusionnée avec la pièce 10.

Il est bien entendu que le mode de réalisation qui vient d'être décrit ne présente aucun caractère limitatif et qu'il pourra recevoir toute modification désirable sans sortir pour cela du cadre de l'invention dans la portée des revendications.

## Revendications

1. Ensemble d'une pièce d'aspect (12) en matière thermoplastique d'un véhicule automobile et d'une autre pièce (10) ayant une partie mince en matière thermoplastique solidarisée à la pièce d'aspect (12) par fusion de matière, **caractérisé en ce que** la partie mince présente au moins un orifice traversant **et en ce que** la fusion (22) de la pièce d'aspect (12) avec cette partie mince est localisée uniquement sur les contours de l'orifice traversant.

2. Ensemble selon la revendication 1, dans lequel la pièce d'aspect (12) est une pièce de carrosserie.

3. Ensemble selon la revendication 1, dans lequel la pièce d'aspect (12) est une peau de pare-chocs.

4. Ensemble selon l'une quelconque des revendications 1 à 3, dans lequel l'autre pièce (10) est une pièce-support d'un organe fonctionnel (24).

5. Ensemble selon la revendication 4,dans lequel l'organe fonctionnel (24) est un capteur, notamment un capteur à ultrasons.

6. Ensemble selon l'une quelconque des revendications 1 à 3, dans lequel l'autre pièce est un renfort, notamment un renfort de crosse de pare-chocs.

7. Procédé d'assemblage par fusion de matière d'une pièce d'aspect (12) en matière thermoplastique d'un véhicule automobile sur une autre pièce (10) ayant une partie mince en matière thermoplastique, la fusion (22) de matière étant obtenue par soudage, par vibrations tangentielles (V2) d'une panne (14) dans une gamme de fréquences ultrasonores, **caractérisé en ce qu'**on applique les vibrations tangentielles (V2) sur la partie mince de l'autre pièce (10) jusqu'à former au moins un orifice traversant dans cette pièce (10) ainsi qu'une fusion (22) de cette pièce (10) avec la pièce d'aspect (12) sur les contours de cet orifice.

8. Procédé d'assemblage selon la revendication 7, dans lequel on génère des vibrations à distance de la partie mince (10) et selon une direction normale à cette partie mince (10), puis on transforme les vibrations générées selon la direction normale en vibrations tangentielles à cette partie mince (10), et on applique les vibrations tangentielles sur une zone réduite de la pièce d'aspect (12).

9. Procédé d'assemblage selon la revendication 8, utilisant une sonotrode (16) comportant une extrémité d'excitation (18), au moins une extrémité vibrante (20) et un corps (22) reliant l'extrémité d'excitation (18) à l'extrémité vibrante (20), conformé pour transformer un mouvement périodique (V1) imprimé à l'extrémité d'excitation (18) selon une direction d'excitation en un mouvement périodique (V2) de l'extrémité vibrante (20) selon une direction de vibration perpendiculaire à la direction d'excitation.

10. Procédé d'assemblage selon la revendication 9, dans lequel la sonotrode (16) utilisée possède deux extrémités vibrantes (20), disposées de telle manière que la sonotrode (16) a une forme de diapason.

11. Procédé d'assemblage selon la revendication 10, dans lequel les deux extrémités vibrantes (20) de la sonotrode (16) laissent entre elles un espace suffisant pour y laisser passer une partie en saillie de l'autre pièce, telle qu'un support de capteur.

## Claims

1. An assembly of a trim part (12) of thermoplastic material for a motor vehicle and another part (10) having a thin portion of thermoplastic material secured to the trim part (12) by melting material, **characterized in that** the thin portion presents at least one through orifice and **in that** the melting (22) of the trim part (12) with said thin portion is localized solely at the outlines of the through orifice.

2. An assembly according to claim 1, in which the trim part (12) is a bodywork part.

3. An assembly according to claim 1, in which the trim part (12) is a bumper skin.

4. An assembly according to any one of claims 1 to 3, in which the other part (10) is a support part for a functional member (24).

5. An assembly according to claim 4, in which the functional member (24) is a sensor, in particular an ultrasound sensor.

6. An assembly according to any one of claims 1 to 3, in which the other part constitutes reinforcement, in particular reinforcement for a bumper overrider.

7. A method of assembling a trim part (12) of thermoplastic material for a motor vehicle with another part (10) having a thin portion of thermoplastic material, assembly being performed by melting material by welding by means of tangential vibrations (V2) of a bit (14) in an ultrasound frequency range, **characterized in that** the tangential vibrations (V2) are applied to the thin portion of the other part (10) so as to form at least one through orifice in said part (10) and so as to melt said part (10) together with the trim part (12) at the outline of said orifice.

8. An assembly method according to claim 7, in which vibrations are generated at a distance from the thin portion (10) in a direction that is normal to said thin portion (10), and then the vibrations generated in the normal direction are transformed into vibrations tangential to said thin portion (10), and the tangential vibrations are applied to a small zone of the trim part (12).

9. An assembly according to claim 8, using a sonotrode (16) having an excitation end (18), at least one vibration end (20), and a body (22) connecting the excitation end (18) to the vibrating end (20), and shaped so as to transform periodic motion (V1) imparted to the excitation end (18) in an excitation direction into periodic motion (V2) of the vibrating end (20) in a vibration direction perpendicular to the excitation direction.

10. An assembly according to claim 9, in which the sonotrode (16) used possesses two vibrating ends (20) disposed in such a manner that the sonotrode is tuning-fork shaped.

11. An assembly according to claim 10, in which the two vibrating ends (20) of the sonotrode (16) leave sufficient space between them to leave room to pass a portion projecting from the other part, e.g. a sensor support.

## Patentansprüche

1. Einheit eines Außenteils (12) aus Thermoplast von einem Kraftfahrzeug und eines anderen Teils (10) mit einem dünnen Abschnitt aus Thermoplast, das durch Aufschmelzen von Material mit dem Außenteil (12) fest verbunden wird, **dadurch gekennzeichnet, dass** der dünne Abschnitt zumindest ein durchgehendes Loch aufweist und dass das Aufschmelzen (22) des Außenteils (12) mit diesem dünnen Abschnitt nur auf den Konturen des durchgehenden Lochs stattfindet.

2. Einheit nach Anspruch 1, in der das Außenteil (12) ein Karosserieteil ist.

3. Einheit nach Anspruch 1, in der das Außenteil (12) ein Stoßfängerüberzug ist.

4. Einheit nach einem der Ansprüche 1 bis 3, in der das andere Teil (10) eine Teilehalterung eines Funktionselementes (24) ist.

5. Einheit nach Anspruch 4, in der das Funktionselement (24) ein Sensor ist, insbesondere ein Ultraschallsensor.

6. Einheit nach einem der Ansprüche 1 bis 3, in der das andere Teil eine Verstärkung ist, insbesondere eine Verstärkung der Stoßfängertraverse.

7. Zusammenfügungsverfahren durch Aufschmelzen des Materials eines Außenteils (12) aus Thermoplast eines Kraftfahrzeuges auf ein anderes Teil (10) mit einem dünnen Abschnitt aus Thermoplast, wobei das Aufschmelzen des Materials (22) durch Schweißen, durch Tangentialschwingungen (V2) einer Finne (14) in einem Ultraschallfrequenzbereich erfolgt, **dadurch gekennzeichnet, dass** die Tangentialschwingungen (V2) auf den dünnen Abschnitt des anderen Teils (10) einwirken, bis zumindest ein durchgehendes Loch in diesem Teil (10), sowie eine Schmelze (22) dieses Teils (10) mit dem Außenteil (12) auf den Konturen von diesem Loch gebildet sind.

8. Zusammenfügungsverfahren nach Anspruch 7, in dem Schwingungen mit Abstand von diesem dünnen Abschnitt (10) und nach einer normalen Richtung zu diesem dünnen Abschnitt (10) erzeugt werden, anschließend die nach der normalen Richtung erzeugten Schwingungen in Tangentialschwingungen an diesem dünnen Abschnitt (10) transformiert werden und die Tangentialschwingungen auf einen reduzierten Bereich des Außenteils (12) einwirken.

9. Zusammenfügungsverfahren nach Anspruch 8, das eine Sonotrode (16) verwendet, die ein erregendes Ende (18), zumindest ein schwingendes Ende (20) und einen Körper (22), der das erregende Ende (18) mit dem schwingenden Ende (20) verbindet, aufweist, das dazu geeignet ist, eine periodische Bewegung (V1), die dem erregenden Ende (18) nach einer Erregungsrichtung gegeben ist, in eine periodische Bewegung (V2) des schwingenden Endes (20) nach einer Schwingungsrichtung senkrecht zur Erregungsrichtung zu transformieren.

10. Zusammenfügungsverfahren nach Anspruch 9, in dem die verwendete Sonotrode (16) zwei schwingende Enden (20) aufweist, die derart angeordnet sind, dass die Sonotrode (16) die Form einer Stimmgabel aufweist.

11. Zusammenfügungsverfahren nach Anspruch 10, in dem zwischen den beiden schwingenden Enden (20) der Sonotrode (16) genügend Raum verbleibt, so dass ein auskragender Abschnitt des anderen Teils, z.B. ein Sensorträger, hindurchpasst.
